# FASCICULE DE BREVET EUROPEEN

(11) **EP 3 753 784 B1**
(45) Date de publication et mention de la délivrance du brevet: **25.05.2022**
(21) Numéro de dépôt: 20181198.1
(22) Date de dépôt: 19.06.2020
(51) Int. Cl.: B60N 2/809, B60N 2/894

(54) **APPUI-TÊTE DE SIÈGE DE VÉHICULE AUTOMOBILE**
KOPFSTÜTZE FÜR KRAFTFAHRZEUGSITZ
HEADREST FOR A MOTOR VEHICLE SEAT

(30) Priorité: 20.06.2019 FR 1906681
(43) Date de publication de la demande: 23.12.2020
(73) Titulaire: TESCA France, 75008 Paris (FR)
(72) Inventeur: GEORGES, Laurent, 08190 Roizy (FR); LEFEVRE, Steve, 75008 Paris (FR)
(74) Mandataire: Sayettat, Julien Christian

(56) Documents cités:
- EP-A1- 1 431 110
- FR-A1- 3 036 666

## Description

L'invention concerne un appui-tête de siège de véhicule automobile et un procédé de montage d'un tel appui-tête.

Il est connu de réaliser un appui-tête de siège de véhicule automobile, ledit appui-tête comprenant :
- une armature comprenant deux tiges métalliques parallèles, sensiblement verticales, de montage en haut de dossier dudit siège,
- une coque arrière à base de matériau plastique moulé,
- une coque avant à base de matériau plastique moulé, lesdites coques étant assemblée entre elles pour former un boitier, une desdites coques comprenant deux conduits respectifs de réception en coulissement des parties supérieures de chacune desdites tiges,
- un coussin d'appui-tête recouvrant ledit boitier,
- un dispositif de verrouillage de la position dudit boitier par rapport à ladite armature selon une pluralité de positions de réglage, de manière à permettre un réglage en hauteur dudit coussin par rapport audit dossier.

L'assemblage entre les coques est usuellement réalisé de multiples façons : par soudage, par des vis, etc.

Le document EP-1 431 110 décrit un appui-tête de siège de véhicule automobile comprenant une armature pourvue d'au moins une tige qui s'étend suivant un axe Z, un boitier monté mobile en translation sur la tige, ledit boitier intégrant un système de blocage de sa translation le long de ladite tige.

Le document FR-3 036 666 décrit un appui tête pour siège de véhicule automobile comprenant une broche s'étendant selon une première direction de réglage (Z), un support monté mobile en translation sur ladite broche, un premier dispositif de verrouillage monté sur ledit support pour sélectivement le verrouiller ou le déverrouiller sur ladite broche, un deuxième dispositif de verrouillage monté sur ledit support et mobile indépendamment du premier dispositif de verrouillage pour sélectivement verrouiller et déverrouiller une structure d'appui-tête sur le support, et un organe de commande actionnable par un utilisateur pour déverrouiller simultanément les premier et deuxième dispositifs de verrouillage.

Cependant, de telles façons de procéder sont complexes et/ou le boitier présente une robustesse insuffisante en cas de choc de la tête d'un passager sur le coussin d'appui-tête, les coques pouvant se dissocier l'une de l'autre. L'invention a pour but de pallier ces inconvénients.

A cet effet, et selon un premier aspect, l'invention propose un appui-tête de siège de véhicule automobile, ledit appui-tête comprenant :
- une armature comprenant deux tiges métalliques parallèles, sensiblement verticales, de montage en haut de dossier dudit siège,
- une coque arrière à base de matériau plastique moulé,
- une coque avant à base de matériau plastique moulé, lesdites coques étant assemblée entre elles pour former un boitier, une desdites coques comprenant deux conduits respectifs de réception en coulissement des parties supérieures de chacune desdites tiges,
- un coussin d'appui-tête recouvrant ledit boitier,
- un dispositif de verrouillage de la position dudit boitier par rapport à ladite armature selon une pluralité de positions de réglage, de manière à permettre un réglage en hauteur dudit coussin par rapport audit dossier,
ledit appui-tête comprenant en outre :
- deux jeux de rails complémentaires disposés de part et d'autre d'un plan de symétrie vertical longitudinal dudit boitier, lesdits rails complémentaires étant respectivement issus de moulage de chacune desdites coques, lesdits rails s'étendant verticalement et étant agencés de manière à s'emboiter l'un avec l'autre par coulissement sensiblement vertical,
- au moins un moyen de verrouillage du coulissement desdits rails l'un par rapport à l'autre pour maintenir lesdites coques en position nominale.

Dans cette description, les termes de positionnement dans l'espace (haut, bas, supérieur, inférieur, longitudinal, transversal, latéral, avant, arrière, vertical, ...) sont pris en référence à l'appui-tête disposé en configuration d'utilisation dans le véhicule.

Avec l'agencement proposé, l'assemblage entre les coques se fait de façon particulièrement simple et le boitier obtenu présente une très grande robustesse.

Selon un deuxième aspect, l'invention propose un procédé de montage d'un tel appui-tête.

D'autres particularités et avantages de l'invention apparaîtront dans la description qui suit, faite en référence aux figures jointes, dans lesquelles :

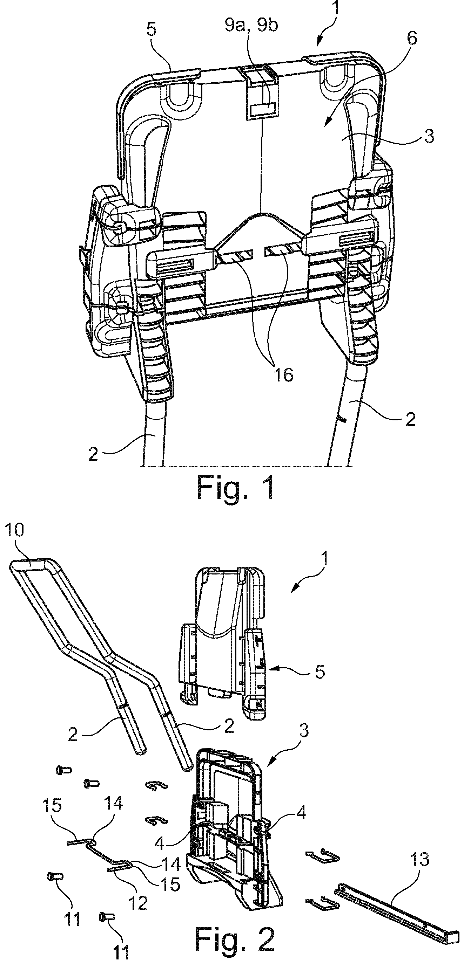

- la figure 1 est une vue en perspective partielle d'un appui-tête selon une réalisation,
- la figure 2 est une vue en perspective éclatée de la réalisation de la figure 1,

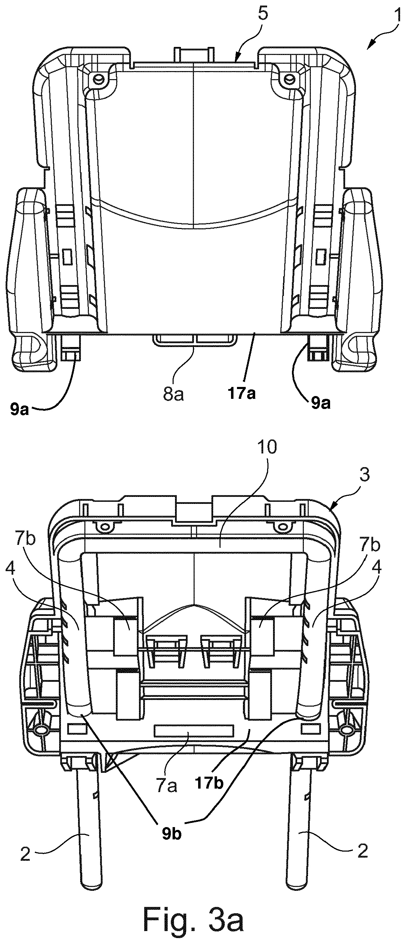

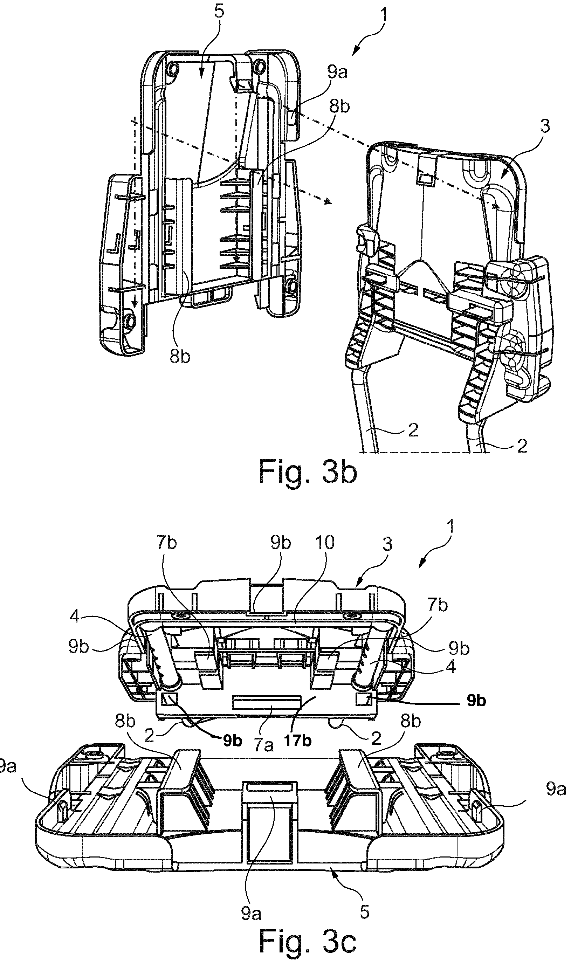

- les figures 3a, 3b et 3c sont des vues en perspective semi-éclatée de la réalisation de la figure 1 selon différents angles de vue,

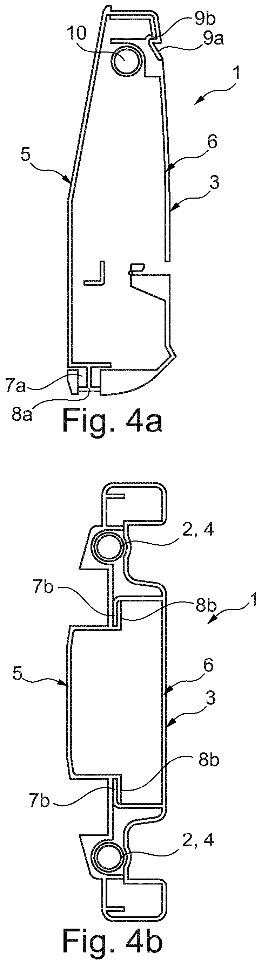

- les figures 4a et 4b sont des vues en coupe verticale longitudinale (figure 4a) et horizontale (figure 4b) de la réalisation de la figure 1 ;
- la figure 5 est une vue en coupe horizontale d'une variante de réalisation.

En référence aux figures, on décrit un appui-tête 1 de siège de véhicule automobile, ledit appui-tête comprenant :
- une armature comprenant deux tiges 2 métalliques parallèles, sensiblement verticales, de montage en haut de dossier dudit siège,
- une coque arrière 3 à base de matériau plastique moulé,
- une coque avant 5 à base de matériau plastique moulé, lesdites coques étant assemblée entre elles pour former un boitier 6, une desdites coques 3 comprenant deux conduits 4 respectifs de réception en coulissement des parties supérieures de chacune desdites tiges,
- un coussin d'appui-tête, non représenté, recouvrant ledit boitier,
- un dispositif de verrouillage de la position dudit boitier par rapport à ladite armature selon une pluralité de positions de réglage, de manière à permettre un réglage en hauteur dudit coussin par rapport audit dossier,
ledit appui-tête comprenant en outre :
- deux jeux de rails complémentaires 7b,8b disposés de part et d'autre d'un plan de symétrie vertical longitudinal dudit boitier, lesdits rails complémentaires étant respectivement issus de moulage de chacune desdites coques, lesdits rails s'étendant verticalement et étant agencés de manière à s'emboiter l'un avec l'autre par coulissement sensiblement vertical,
- au moins un moyen de verrouillage 9a,9b du coulissement desdits rails l'un par rapport à l'autre pour maintenir lesdites coques en position nominale.

Selon la réalisation représentée, les extrémités supérieures des tiges 2 sont reliées par une entretoise 10, étant ici formée d'une pièce avec lesdites tiges, l'ensemble étant notamment formé par un tube métallique replié en forme générale de U renversé.

Selon une réalisation, au moins un rail 8b s'étend sur une hauteur d'au moins 50 mm, de manière à assurer un assemblage robuste des coques 3,5 sur une partie maximisée de leur hauteur.

Selon la réalisation représentée, au moins un rail 7b se présente sous forme discontinue, ce qui peut notamment permettre l'insertion d'un fil de verrouillage 12 tel que décrit plus loin.

Selon la réalisation représentée, les coques 3,5 comprennent des surfaces de butée réciproques 17a,17b permettant une mise en butée desdites coques en position nominale.

Selon la réalisation représentée, les surfaces de butée réciproques 17a,17b sont respectivement pourvues d'un ergot 8a et d'un orifice 7a, ledit ergot étant inséré dans ledit orifice pour verrouiller le placage des coques 3,5 l'une contre l'autre au niveau desdites surfaces.

Selon la réalisation représentée, un moyen de blocage 9a,9b peut comprendre :
- une saillie 9a élastiquement rétractable, de manière à pouvoir se rétracter temporairement lors de l'assemblage des coques 3,5 entre elles, ladite saillie étant issue de moulage d'une desdites coques, ladite saillie pouvant notamment être en forme de harpon,
- une butée d'ancrage 9b de ladite saillie prévue sur l'autre desdites coques.

Selon la réalisation représentée, l'appui-tête 1 comprend en outre des vis 11 de sécurisation de l'assemblage des coques 3,5 entre elles.

Dans la mesure où l'assemblage est déjà assuré par les rails 7b,8b, la quantité de vis 11 utilisées - ici quatre - est bien moindre que celle prévue dans certaines réalisations de l'art antérieur.

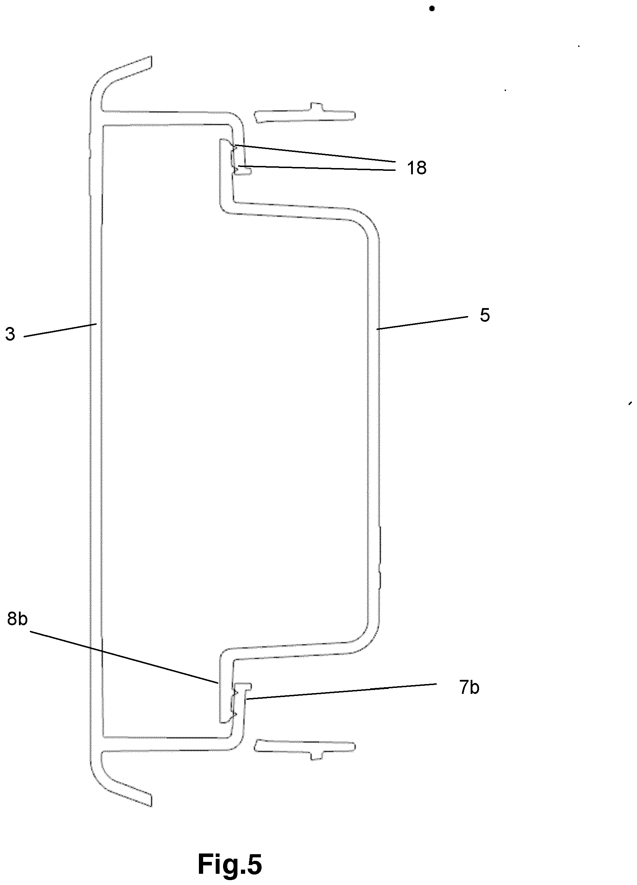

Selon la variante de réalisation représentée en figure 5, au moins un rail 7b,8b est pourvu d'au moins une - en particulier deux sur la réalisation représentée - nervure 18 de rattrapage de jeu s'étendant le long dudit rail, le contact entre deux rails réciproques 7b,8b se faisant par ladite nervure.

La largeur de la nervure 18 est choisie de manière suffisamment fine - étant par exemple inférieure à 0,5 mm - de façon à permettre sa déformation si nécessaire pour supprimer tout jeu entre les rails 7b,8b quand les coques 3,5 sont en position nominale.

Selon la réalisation représentée, le dispositif de verrouillage comprend un fil métallique 12 emboité sur une traverse 13 montée en translation transversale dans le boitier 6 et étant actionnable par un utilisateur, ledit fil étant pourvu de deux zones latérales 14 conformées en U, une branche 15 de chaque U étant destinée à s'insérer dans des crans 19 latéraux prévus sur chacune des tiges 2, de manière à définir une pluralité de positions de réglage, ledit fil étant rappelé en position de verrouillage par un ressort.

On décrit à présent un procédé de montage d'un appui-tête 1, ledit procédé comprenant une opération d'emboitement des coques 3,5 l'une avec l'autre, ladite opération prévoyant les étapes suivantes :
- disposer lesdites coques l'une contre l'autre en décalage vertical l'une par rapport à l'autre, de manière à positionner les rails complémentaires 7b,8b en début de course,
- les faire coulisser verticalement l'une par rapport à l'autre jusqu'à leur mise en position nominale, de manière à réaliser leur emboitement par coopération desdits rails complémentaires et leur maintien par le moyen de verrouillage 9a,9b.

Quand le dispositif de verrouillage comprend un fil métallique 12 tel que décrit dans la réalisation représentée, le procédé peut comprendre, afin de permettre le montage sans être gêné par ledit fil, les étapes suivantes :
- avant assemblage des coques 3,5 entre elles, une étape de pré-montage du fil métallique 12 dans une position de montage dans une desdites coques, ledit fil étant non emboité sur la traverse 13,
- après assemblage desdites coques entre elles, une étape de déplacement dudit fil métallique pour l'emboiter sur ladite traverse, ledit déplacement étant réalisé par un appui exercé sur ledit fil au travers d'une ouverture 16 réalisée dans le boitier 6.

## Revendications

1. Appui-tête (1) de siège de véhicule automobile, ledit appui-tête comprenant :
• une armature comprenant deux tiges (2) métalliques parallèles, sensiblement verticales, de montage en haut de dossier dudit siège,
• une coque arrière (3) à base de matériau plastique moulé,
• une coque avant (5) à base de matériau plastique moulé, lesdites coques étant assemblée entre elles pour former un boitier (6), une desdites coques (3) comprenant deux conduits (4) respectifs de réception en coulissement des parties supérieures de chacune desdites tiges,
• un coussin d'appui-tête recouvrant ledit boitier,
• un dispositif de verrouillage de la position dudit boitier par rapport à ladite armature selon une pluralité de positions de réglage, de manière à permettre un réglage en hauteur dudit coussin par rapport audit dossier,
ledit appui-tête étant **caractérisé en ce qu'**il comprend en outre :
• deux jeux de rails complémentaires (7b,8b) disposés de part et d'autre d'un plan de symétrie vertical longitudinal dudit boitier, lesdits rails complémentaires étant respectivement issus de moulage de chacune desdites coques, lesdits rails s'étendant verticalement et étant agencés de manière à s'emboiter l'un avec l'autre par coulissement sensiblement vertical,
• au moins un moyen de verrouillage (9a,9b) du coulissement desdits rails l'un par rapport à l'autre pour maintenir lesdites coques en position nominale.

2. Appui-tête selon la revendication 1, **caractérisé en ce qu'**au moins un rail (8b) s'étend sur une hauteur d'au moins 50 mm.

3. Appui-tête selon l'une des revendications 1 ou 2, **caractérisé en ce qu'**au moins un rail (7b) se présente sous forme discontinue.

4. Appui-tête selon l'une quelconque des revendications 1 à 3, **caractérisé en ce que** les coques (3,5) comprennent des surfaces de butée réciproques (17a,17b) permettant une mise en butée desdites coques en position nominale.

5. Appui-tête selon la revendication 4, **caractérisé en ce que** les surfaces de butée réciproques (17a,17b) sont respectivement pourvues d'un ergot (8a) et d'un orifice (7a), ledit ergot étant inséré dans ledit orifice pour verrouiller le placage des coques (3,5) l'une contre l'autre au niveau desdites surfaces.

6. Appui-tête selon l'une quelconque des revendications 1 à 5, caractérisé en qu'un moyen de blocage (9a,9b) comprend :
• une saillie (9a) élastiquement rétractable, de manière à pouvoir se rétracter temporairement lors de l'assemblage des coques (3,5) entre elles, ladite saillie étant issue de moulage d'une desdites coques,
• une butée d'ancrage (9b) de ladite saillie prévue sur l'autre desdites coques.

7. Appui-tête selon l'une quelconque des revendications 1 à 6, **caractérisé en ce qu'**au moins un rail (7b,8b) est pourvu d'au moins une nervure (18) de rattrapage de jeu s'étendant le long dudit rail, le contact entre deux rails réciproques (7b,8b) se faisant par ladite nervure.

8. Appui-tête selon l'une quelconque des revendications 1 à 7, **caractérisé en ce que** le dispositif de verrouillage comprend un fil métallique (12) emboité sur une traverse (13) montée en translation transversale dans le boitier (6) et étant actionnable par un utilisateur, ledit fil étant pourvu de deux zones latérales (14) conformées en U, une branche (15) de chaque U étant destinée à s'insérer dans des crans (19) latéraux prévus sur chacune des tiges (2), de manière à définir une pluralité de positions de réglage, ledit fil étant rappelé en position de verrouillage par un ressort.

9. Procédé de montage d'un appui-tête selon l'une quelconque des revendications précédentes, ledit procédé comprenant une opération d'emboitement des coques (3,5) l'une avec l'autre, ladite opération prévoyant les étapes suivantes :
• disposer lesdites coques l'une contre l'autre en décalage vertical l'une par rapport à l'autre, de manière à positionner les rails complémentaires (7b,8b) en début de course,
• les faire coulisser verticalement l'une par rapport à l'autre jusqu'à leur mise en position nominale, de manière à réaliser leur emboitement par coopération desdits rails complémentaires et leur maintien par le moyen de verrouillage (9a,9b).

10. Procédé selon la revendication 9, quand elle se rattache à la revendication 8, **caractérisé en ce qu'**il comprend :
• avant assemblage des coques (3,5) entre elles, une étape de pré-montage du fil métallique (12) dans une position de montage dans une desdites coques, ledit fil étant non emboité sur la traverse (13),
• après assemblage desdites coques entre elles, une étape de déplacement dudit fil métallique pour l'emboiter sur ladite traverse, ledit déplacement étant réalisé par un appui exercé sur ledit fil au travers d'une ouverture (16) réalisée dans le boitier (6).

## Patentansprüche

1. Kopfstütze (1) eines Kraftfahrzeugsitzes, wobei die Kopfstütze umfasst:
• ein Gestell, das zwei im Wesentlichen vertikale, parallele metallische Stäbe (2) zum Montieren oben an der Rückenlehne des Sitzes umfasst,
• eine hintere Schale (3) auf Grundlage eines geformten Kunststoffmaterials,
• eine vordere Schale (5) auf Grundlage eines geformten Kunststoffmaterials, wobei die Schalen miteinander zusammengesetzt sind, um ein Gehäuse (6) zu bilden, wobei eine der Schalen (3) zwei jeweilige Leitungen (4) zur gleitenden Aufnahme der oberen Teile eines jeden der Stäbe umfasst,
• ein Kopfstützenkissen, das das Gehäuse bedeckt,
• eine Verriegelungsvorrichtung der Position des Gehäuses in Bezug auf das Gestell entsprechend einer Vielzahl von Einstellpositionen, um eine Höheneinstellung des Kissens in Bezug auf die Rückenlehne zu ermöglichen,
wobei die Kopfstütze **dadurch gekennzeichnet ist, dass** sie weiter umfasst:
• zwei ergänzende Schienensätze (7b, 8b), die beiderseits einer längsgerichteten vertikalen Symmetrieebene des Gehäuses angeordnet sind, wobei die ergänzenden Schienen jeweils aus dem Formguss einer jeden der Schalen stammen, wobei sich die Schienen vertikal erstrecken und derart angeordnet sind, um durch im Wesentlichen vertikales Gleiten ineinander einzurasten,
• mindestens ein Verriegelungsmittel (9a, 9b) für das Gleiten der Schienen zueinander, zum Festhalten der Schalen in Sollposition.

2. Kopfstütze nach Anspruch 1, **dadurch gekennzeichnet, dass** sich mindestens eine Schiene (8b) über eine Höhe von mindestens 50 mm erstreckt.

3. Kopfstütze nach einem der Ansprüche 1 oder 2, **dadurch gekennzeichnet, dass** sich mindestens eine Schiene (7b) in einer unterbrochenen Form darstellt.

4. Kopfstütze nach einem der Ansprüche 1 bis 3, **dadurch gekennzeichnet, dass** die Schalen (3, 5) wechselseitige Anschlagoberflächen (17a, 17b) umfassen, die eine Anschlagstellung der Schalen in Sollposition ermöglichen.

5. Kopfstütze nach Anspruch 4, **dadurch gekennzeichnet, dass** die wechselseitigen Anschlagoberflächen (17a, 17b) jeweils mit einem Zapfen (8a) und einer Öffnung (7a) versehen sind, wobei der Zapfen in die Öffnung eingeführt wird, um die Anlage der Schalen (3,5) aneinander im Bereich der Oberflächen zu verriegeln.

6. Kopfstütze nach einem der Ansprüche 1 bis 5, **dadurch gekennzeichnet, dass** ein Sperrmittel (9a, 9b) umfasst:
• einen elastisch einziehbaren Vorsprung (9a), um beim Zusammensetzen der Schalen (3, 5) miteinander vorübergehend eingezogen werden zu können, wobei der Vorsprung aus dem Formguss einer der Schalen stammt,
• einen Verankerungsanschlag (9b) des Vorsprungs, der an der anderen der Schalen vorgesehen ist.

7. Kopfstütze nach einem der Ansprüche 1 bis 6, **dadurch gekennzeichnet, dass** mindestens eine Schiene (7b, 8b) mit mindestens einer Rippe (18) zum Spielausgleich versehen ist, die sich entlang der Schiene erstreckt, wobei der Kontakt zwischen zwei wechselseitigen Schienen (7b, 8b) durch die Rippe erfolgt.

8. Kopfstütze nach einem der Ansprüche 1 bis 7, **dadurch gekennzeichnet, dass** die Verriegelungsvorrichtung einen Metalldraht (12) umfasst, der auf einem Querträger (13) einrastet, der querlaufend translatorisch in dem Gehäuse (6) montiert ist, und durch einen Benutzer betätigbar ist, wobei der Draht mit zwei Seitenbereichen (14) versehen ist, die in U-Form gestaltet sind, wobei ein Schenkel (15) eines jeden U dazu bestimmt ist, in seitliche Einkerbungen (19) eingeführt zu werden, die an jedem der Stäbe (2) vorgesehen sind, um eine Vielzahl von Einstellpositionen zu definieren, wobei der Draht durch eine Feder in eine Verriegelungsposition zurückgestellt wird.

9. Verfahren zum Montieren einer Kopfstütze nach einem der vorstehenden Ansprüche, wobei das Verfahren einen Einrastvorgang der Schalen (3, 5) miteinander umfasst, wobei der Vorgang die folgenden Schritte vorsieht:
• Anordnen der Schalen aneinander mit einem vertikalen Versatz zueinander, um die ergänzenden Schienen (7b, 8b) am Weganfang zu positionieren,
• sie vertikal zueinander bis in ihre Sollposition gleiten lassen, um ihr Einrasten durch Zusammenwirken der ergänzenden Schienen und deren Halt durch das Verriegelungsmittel (9a, 9b) zu realisieren.

10. Verfahren nach Anspruch 9, wenn er mit Anspruch 8 verknüpft ist, **dadurch gekennzeichnet, dass** es umfasst:
• vor dem Zusammensetzen der Schalen (3, 5) miteinander einen Schritt des Vormontierens des Metalldrahts (12) in einer Montageposition in einer der Schalen, wobei der Draht nicht am Querträger (13) eingerastet ist,
• nach dem Zusammensetzen der Schalen miteinander einen Schritt des Verschiebens des Metalldrahtes, um ihn auf dem Querträger einzurasten, wobei das Verschieben durch einen Druck realisiert wird, der durch eine Öffnung (16) hindurch, die in dem Gehäuse (6) realisiert ist, auf den Draht ausgeübt wird.

## Claims

1. Headrest (1) for a motor vehicle seat, said headrest comprising:
• a frame comprising two parallel, substantially vertical metal rods (2) for mounting at the top of the backrest of said seat,
• a rear shell (3) made from moulded plastic material,
• a front shell (5) made from moulded plastic material, said shells being assembled together to form a housing (6), one of said shells (3) comprising two respective ducts (4) for sliding in the upper parts of each of said rods,
• a headrest cushion covering said housing,
• a device for locking the position of said housing relative to said frame according to a plurality of adjustment positions, so as to allow a height adjustment of said cushion with respect to said backrest,
said headrest being **characterised in that** it further comprises:
• two sets of complementary rails (7b, 8b) arranged on either side of a longitudinal vertical plane of symmetry of said housing, said complementary rails being moulded respectively from each of said shells, said rails extending vertically and being arranged to fit together by sliding substantially vertically,
• at least one means for locking (9a, 9b) the sliding of said rails with respect to one another to maintain said shells in a nominal position.

2. Headrest according to claim 1, **characterised in that** at least one rail (8b) extends over a height of at least 50 mm.

3. Headrest according to any of claims 1 or 2, **characterised in that** at least one rail (7b) has a discontinuous form.

4. Headrest according to any of claims 1 to 3, **characterised in that** the shells (3, 5) comprise reciprocal abutment surfaces (17a, 17b) which allow the abutment of said shells in a nominal position.

5. Headrest according to claim 4, **characterised in that** the mutual abutment surfaces (17a, 17b) are provided respectively with a pin (8a) and a hole (7a), said pin being inserted into said hole to lock the shells in position (3, 5) against one another on said surfaces.

6. Headrest according to any of claims 1 to 5, **characterised in that** a locking means (9a, 9b) comprises:
• an elastically retractable projection (9a) which can retract temporarily when assembling the shells (3, 5) with one another, said projection being moulded from one of said shells,
• an anchoring stop (9b) of said projection provided on the other of said shells.

7. Headrest according to any of claims 1 to 6, **characterised in that** at least one rail (7b, 8b) is provided with at least one adjusting rib (18) with play extending along said rail, the contact between two mutual rails (7b, 8b) being made by said rib.

8. Headrest according to any of claims 1 to 7, **characterised in that** the locking device comprises a metal wire (12) fitted onto a crosspiece (13) mounted in translation transversally in the housing (6) and being operable by a user, said wire being provided with two U-shaped lateral zones (14), a branch (15) of each U being intended for insertion in lateral notches (19) provided on each of the rods (2), so as to define a plurality of adjustment positions, said wire being returned to a locking position by a spring.

9. Method for assembling a headrest according to any of the preceding claims, said method comprising an operation of interlocking the shells (3, 5) with one another, said operation involving the following steps:
• arranging said shells against one another in a vertically offset manner, so as to position the complementary rails (7b, 8b) at the beginning of their stroke,
• sliding them vertically relative to one another until they are in a nominal position, so as to interlock the latter by the cooperation of said complementary rails and their retention by the locking means (9a, 9b).

10. Method according to claim 9, when it relates to claim 8, **characterised in that** it comprises:
• before assembling the shells (3, 5) with one another, a step of premounting the metal wire (12) in a mounting position in one of said shells, said wire being not fitted on the crosspiece (13),
• after assembling said shells with one another, a step of displacing said metal wire to fit it onto said crosspiece, the said displacement being performed by pressure on said wire through an opening (16) made in the housing (6).
